# EUROPEAN PATENT SPECIFICATION

(11) **EP 3 812 080 B1**
(45) Date of publication and mention of the grant of the patent: **02.08.2023**
(21) Application number: 20203118.3
(22) Date of filing: 21.10.2020
(51) Int. Cl.: B23K 26/36, B23K 26/402, B29B 17/02, B23K 103/16, B23K 103/00

(54) **METHOD OF RECYCLING FIBER REINFORCED PLASTIC**
VERFAHREN ZUM RECYCLING VON FASERVERSTÄRKTEN KUNSTSTOFF
MÉTHODE DE RECYCLAGE DU PLASTIQUE RENFORCÉ DE FIBRES

(30) Priority: 25.10.2019 JP 2019194036
(43) Date of publication of application: 28.04.2021
(73) Proprietor: Phoenix Electric Co., Ltd., Himeji-shi, Hyogo 679-2122 (JP)
(72) Inventor: GOUDA, Tetsuya, Himeji-shi,, Hyogo 6792122 (JP); MATSUDA, Takeshi, Himeji-shi,, Hyogo 6792122 (JP)
(74) Representative: Horn Kleimann Waitzhofer Patentanwälte PartG mbB

(56) References cited:
- WO-A1-2008/154889
- DE-A1- 3 903 153
- DE-A1-102008 062 350
- DE-A1-102011 014 017
- DE-A1-102013 112 933
- US-A1- 2017 203 384
- US-A1- 2019 024 689
- US-A1- 2019 126 328

## Description

### BACKGROUND OF THE INVENTION

### Field of the Invention

The present invention relates to a method of processing FRP (Fiber Reinforced Plastic).

### Background Art

US 2019/024689 A1 discloses a joined article including a first component having a laser-treated surface portion and a second component having a laser-treated surface portion. An adhesive joins the first component to the second component at the treated surface portion.
WO 2008/154889 A1 discloses a method for the defined planar removal of individual layers of fiber-reinforced plastics, which are made of at least two different materials.
DE 10 2011 014017 A1 discloses a method involving embedding fibers of a fibercomposite material i.e. carbon-fiber-reinforced plastic, into a matrix i.e. epoxybased resin.
DE 39 03 153 A1 discloses a process for the treatment of surfaces of fiber composite materials and the use of these treated surfaces for adhesive bonding or the repair of structural parts. Use is made of a laser which is set such that the cured polymer is removed to a defined depth and the controlled energy of the laser is adequate only for removal of the polymer, without discernibly damaging the fibers.
US 2019/126328 A1 discloses optimized-coverage selective laser ablation methods which may be utilized to prepare (ablate) a three-dimensional surface. FRP, especially, CFRP (Carbon Fiber Reinforced Plastic) is plastic material using carbon fiber as reinforcement material and has been widely used not only for airplanes and automobiles but also, in recent years, for buildings, bridges, and so forth.

US 2017/203384 A1 discloses a method of recycling fiber reinforced plastic and forms the basis for the preamble of claim 1.

CFRP thus widely used has degraded with time or the surface thereof has been damaged. Hence, demands have emerged for repairing CFRP.

For example, Japan Laid-open Patent Application Publication No. 2014-169409 discloses a device for repairing CFRP. The device repairs CFRP by injecting a repairing agent into a damaged part of the CFRP from outside.

However, the method of repairing CFRP disclosed in Japan Laid-open Patent Application Publication No. 2014-169409 had posed drawbacks of narrow versatility, high complexity, and high cost.

With widening of application of FRP, disposal of used FRP has been a social problem. Hence, establishing a method of recycling FRP has been demanded in addition to repairing FRP as described above.

Now, CFRP has been recycled, for instance, generally by heating CFRP in a large furnace to burn plastic (thermosetting resin) and then retrieving carbon fiber left unburnt.

This method is effective in that a large amount of waste CFRP is processable. However, this method has posed a drawback of necessity for extensive facility.

For the purpose of repairing or recycling FRP, it is generally important to remove plastic (thermosetting resin) by remaining only fiber material functioning as reinforcement material. When only thermosetting resin is removable, FRP is repairable by filling thermosetting resin again. Also, when only fiber material is extractable by removing all thermosetting resin, the fiber material left unremoved is recyclable.

The present invention has been produced in view of the drawbacks described above. It is an object of the present invention to provide a method of processing FRP whereby thermosetting resin is removable from FRP in an easy and convenient manner. The invention is described by the enclosed claims.

### SUMMARY OF THE INVENTION

According to the present invention, a method according to claim 1 is disclosed.

Preferably, the method further includes the following steps: irradiating a plurality of laser beams including the laser beam in irradiated positions at least aligned in a row away from each other at a predetermined interval; and moving the plurality of laser beams in a direction orthogonal to the row of the irradiated positions of the plurality of laser beams.

Preferably, in the method, a plurality of laser beams including the laser beam are irradiated onto the surface of the FRP in the irradiated position of the laser beam as a single irradiation position in a superimposed manner.

According to the present invention, by irradiating the laser beam on the surface of the FRP, the thermosetting resin is removed in the irradiated position, whereby the fiber material contained in the FRP is exposed. Therefore, the FRP can be easily recycled by a relatively compact and low-cost device using a laser light source.

According to the present invention, because the thermosetting resin is completely removed by the laser beam in the thickness direction of the FRP, recycle of the FRP can be implemented by retrieving only the fiber material left unremoved.

### BRIEF DESCRIPTION OF THE DRAWINGS

Referring now to the attached drawings which form a part of this original disclosure:
FIG. 1 is a diagram showing a laser irradiation device 10 configured for implementing a method according to the present invention;
FIG. 2 is a cross-sectional view of an FRP blank S provided as an exemplary target for processing;
FIG. 3 is an exemplary cross-sectional view of the FRP blank S that has been processed with a laser beam L;
FIG. 4 is an exemplary cross-sectional view of a surface T of the FRP blank S that has been repaired;
FIG. 5 is a perspective view of the FRP blank S taking a three-dimensional (3D) shape as an exemplary target for processing;
FIG. 6 is a diagram showing FRP blanks S1 and S2 for forming the FRP blank S taking the three-dimensional (3D) shape as an exemplary target for processing;
FIG. 7 is a diagram showing the laser irradiation device 10 according to modification 1;
FIG. 8 is a diagram showing the laser irradiation device 10 according to modification 2; and
FIG. 9 is a diagram showing a surface B (target for processing) of the FRP blank S during processing with the laser irradiation device 10 according to modification 2.

### DETAILED DESCRIPTION OF EMBODIMENTS

### (Configuration of Laser Irradiation Device 10)

A configuration of a laser irradiation device 10 will be hereinafter explained with reference to drawings. The laser irradiation device 10 is configured for implementing a method according to the present invention.

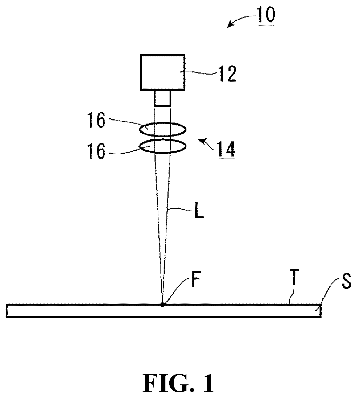

As shown in FIG. 1, the laser irradiation device 10 mainly includes a laser light source 12 and a light collector 14.

The laser light source 12 is a member for generating a laser beam L with a predetermined wavelength and a predetermined waveform. In the present exemplary embodiment, a laser diode (semiconductor laser) is used as the laser light source 12. Obviously, the laser light source 12 is not limited to this; for instance, a laser processing machine capable of generating the laser beam L with higher power may be used instead.

The light collector 14 is a member for concentrating the laser beam L irradiated from the laser light source 12 on a predetermined focal position F. In the present exemplary embodiment, double convex lenses 16 are used in combination with respect to the single laser light source 12 in order to configure the light collector 14. The focal position F is set on a surface T of FRP provided as a target for processing (FRP refers to CFRP in the present exemplary embodiment and will be hereinafter referred to as "FRP blank S"). It should be noted that the focal position F is not necessarily required to be set on the surface T of the FRP blank S as the target for processing if CFRP as the target for processing can be heated to a temperature at which the base material thereof can be removed. The configuration of the light collector 14 is not limited as well to that in the present exemplary embodiment. For example, a reflector may be used as the light collector 14, or alternatively, a lens and a reflector may be used in combination in order to form the light collector 14.

The laser beam L irradiated from the laser light source 12 is refracted at the light collector 14 and is then concentrated on the focal position F, i.e., the surface T of the FRP blank S.

### (Removal of Thermosetting Resin from FRP Blank S)

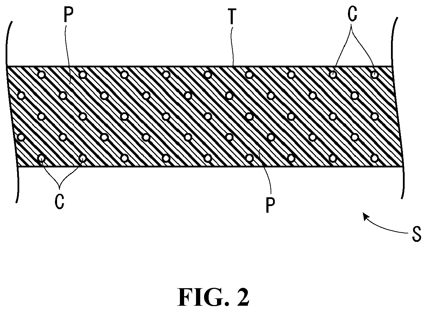

The FRP blank S is normally formed by the following procedure: a plurality of prepreg sheets are laminated, and thereafter, the laminated prepreg sheets are pressure-bonded and hardened. As shown in FIG. 2, each prepreg sheet is herein made of a plurality of carbon fibers C extending approximately in parallel alignment with each other and has been impregnated with thermosetting resin P in advance (e.g., epoxy resin). It should be noted that the method of forming the FRP blank S is not limited to this; for instance, INFUSION method or RTM (Resin Transfer Molding) may be employed instead.

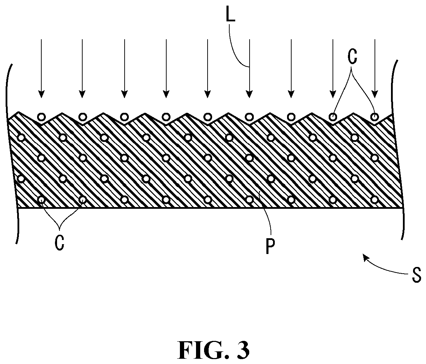

When the laser beam L, irradiated from the laser irradiation device 10 described above, is concentrated on the surface T of the FRP blank S, the temperature of the surface T is locally raised high in the irradiated position (focal position F) by the energy of the laser beam L. As shown in FIG. 3, the thermosetting resin P with a lower boiling point than the carbon fibers C evaporates first, while the carbon fibers C are left as unevaporated.

Irradiation of the laser beam L described above is sequentially executed in a predetermined direction, whereby the thermosetting resin P is removed in the surroundings of a group of carbon fibers C disposed in the closest position to the surface T; the group of carbon fibers C is exposed.

In exposing the carbon fibers C by removing the thermosetting resin P to a deeper position in the thickness (depth) direction of the FRP blank S, the carbon fibers C, already exposed, are removed firstly, and thereafter, the surface T is configured to be sequentially irradiated with the laser beam L again. It should be noted that, the larger the number of layers of removed carbon fibers C becomes, the deeper the position of the surface T irradiated with the laser beam L shifts in the thickness direction of the FRP blank S.

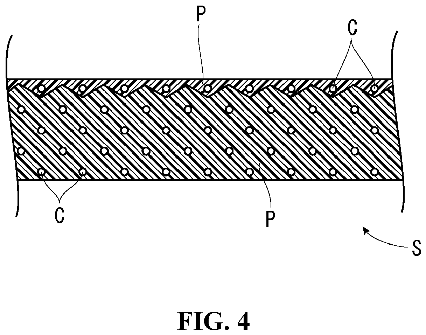

As an example not covered by the present invention, when it is intended to repair the FRP blank S, the thermosetting resin P is removed with the laser beam L as described above to a predetermined depth in the thickness direction of the FRP blank S; removal of the thermosetting resin P is done such that the thermosetting resin P is left unremoved by a predetermined thickness without completely removed in the thickness direction of the FRP blank S. Thereafter, as shown in FIG. 4, the thermosetting resin P is applied anew to and hardened on the region that the carbon fibers C are exposed. Thus, the repair of the FRP blank S can be implemented.

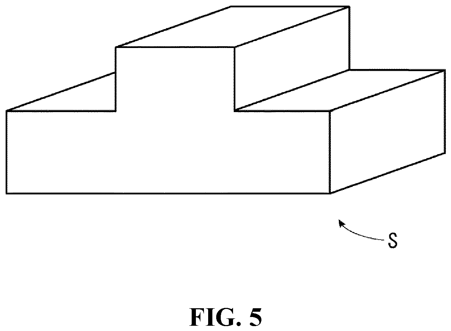

Furthermore, the method of processing FRP according to an example not covered by the present invention is applicable to forming the FRP blank S taking such a three-dimensional (3D) shape as shown in FIG. 5.

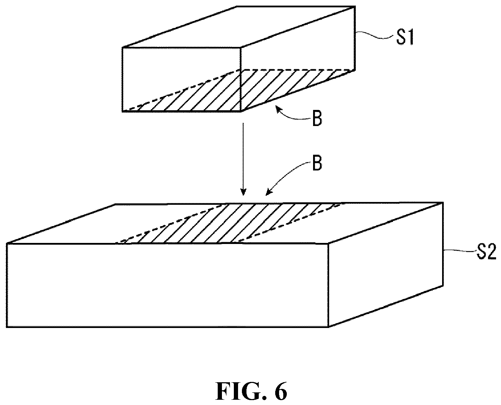

This will be specifically explained as follows. First, two FRP blanks S1 and S2 are prepared as shown in FIG. 6. Next, the method of processing FRP according to an example not covered by the present invention is applied to surfaces B (to be contacted to each other) of both FRP blanks S1 and S2; the carbon fibers C are exposed by removing the thermosetting resin P to a predetermined depth.

Thereafter, both blanks S1 and S2 are attached by the thermosetting resin P or adhesive applied to the surfaces B thereof. As a result, the FRP blank S taking such a three-dimensional (3D) shape as shown in FIG. 5 can be formed.

According to the invention it is intended to recycle the FRP blank S, the thermosetting resin P is completely removed by the laser beam L described above in the thickness direction of the FRP blank S. Thereafter, only the carbon fibers C left unremoved are retrieved. Thus, the recycle of the FRP blank S can be implemented.

As described above, by irradiating the laser beam L on the surface T of the FRP blank S, the thermosetting resin P is removed in the irradiated position (focal position F), whereby the carbon fibers C contained in the FRP blank S are exposed. Therefore, the FRP blank S can be easily recycled by a relatively compact and low-cost device using the laser light source 12.

### (Modification 1)

In the exemplary embodiment described above, the laser irradiation device 10 is composed of a single pair of the laser light source 12 and the light collector 14. Alternatively, the laser irradiation device 10 may be composed of a plurality of pairs of the laser light source 12 and the light collector 14 used in combination. At this time, the laser irradiation device 10 may be configured to irradiate a plurality of laser beams L from the respective laser light sources 12 onto a single irradiation position (focal position F) on the surface T of the FRP blank S in a superimposed manner.

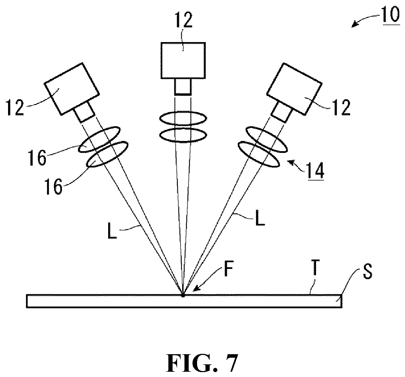

As shown in FIG. 7, the laser irradiation device 10 according to modification 1 is composed of, for instance, three pairs of the laser light source 12 and the light collector 14 used in combination.

### (Modification 2)

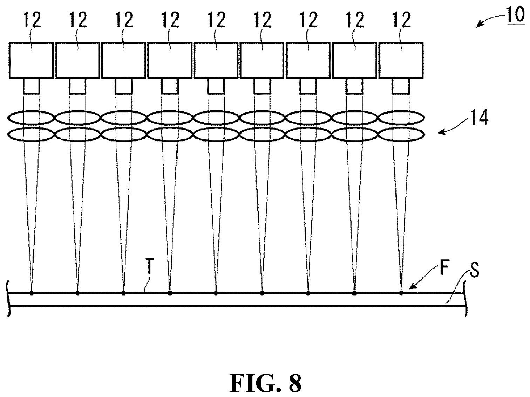

Alternatively, as shown in FIG. 8, the laser irradiation device 10 may be composed of a plurality of pairs of the laser light source 12 and the light collector 14 used in combination. At this time, the laser irradiation device 10 may be configured to irradiate a plurality of laser beams L from the respective laser light sources 12 onto a plurality of irradiated positions (focal positions F) set to be aligned in a row away from each other at a predetermined interval on the FRP blank S.

Obviously, the plural laser beams L may be configured to be irradiated onto a plurality of irradiated positions (focal positions F) on a one-to-one basis. Alternatively, the configuration explained in modification 1 may be combined with that herein explained; the plural laser beams L may be irradiated onto a single irradiated position (focal position F) in a superimposed manner. Furthermore, the plural laser beams L may be irradiated onto a plurality of irradiated positions (focal positions F) aligned in parallel to each other in two or more rows.

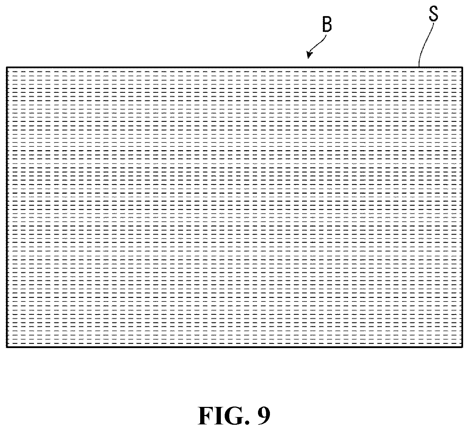

When the plural laser beams L are moved in a direction orthogonal to the row of the irradiated positions (focal positions F) thereof, the surface B (target for processing) of the FRP blank S can be processed at one time as shown in FIG. 9 by adjusting the intervals between the irradiated positions (focal positions F) and the intensity of the laser beams L. It should be noted that FIG. 9 depicts trajectories of the respective laser beams L with dotted lines.

### (Modification 3)

According to the invention, when the surface B of the FRP blank S to be processed is irradiated with the laser beam L, the opposite surface of the FRP blank S is heated by a heating source (e.g., hot plate). Accordingly, the FRP blank S is heated by the heat from the heating source, whereby the FRP blank S can be processed with the laser beam L with lower power.

### (Other Modifications)

In addition, the FRP blank S containing unidirectionally aligned carbon fibers is herein used. However, the processing method according to the present invention is also applicable to process a type of FRP blank containing carbon fibers woven in plain or twill pattern in the vertical direction.

This is also true of various types of FRP blank using fiber material other than carbon, exemplified in the exemplary embodiment described above, such as glass fiber, ceramic fiber, aramid fiber, aluminum fiber, cellulose nanofiber, or so forth.

It should be understood that the embodiment herein disclosed is illustrative only and is not restrictive in all aspects. The scope of the present invention is defined by the appended claims, and encompasses all the changes that come within the meaning and the range of equivalents defined by the appended claims.

10... Laser irradiation device, 12... Laser light source, 14... Light collector L...Laser beam, F...Focal position, S...FRP blank, T...Surface (of FRP blank S), C...Carbon fiber, P...Thermosetting resin, B...Surface

## Claims

1. A method of recycling fiber reinforced plastic (S), comprising:
irradiating a laser beam (L) onto a surface (T) of the fiber reinforced plastic
to remove thermosetting resin (P) from the fiber reinforced plastic in an irradiated position of the laser beam (L) such that fiber material contained in the fiber reinforced plastic is exposed; and
removing the thermosetting resin (P) completely by the laser beam in a thickness direction of the fiber reinforced plastic until only the fiber material is left, **characterized in that**
while the surface (T) of the fiber reinforced plastic (S) is irradiated with the laser beam (L), the opposite surface of the fiber reinforced plastic (S) is heated by a heating source.

2. The method according to claim 1, further comprising:
irradiating a plurality of laser beams (L) including the laser beam (L) in irradiated positions at least aligned in a row away from each other at a predetermined interval; and
moving the plurality of laser beams (L) in a direction orthogonal to the row of the irradiated positions of the plurality of laser beams (L).

3. The method according to claim 1 or 2, wherein a plurality of laser beams (L) including the laser beam (L) are irradiated onto the surface (T) of the fiber reinforced plastic in the irradiated position of the laser beam (L) as a single irradiation position in a superimposed manner.

## Patentansprüche

1. Verfahren zum Recycling von faserverstärktem Kunststoff (S), umfassend:
Bestrahlen einer Oberfläche (T) des faserverstärkten Kunststoffs mit einem Laserstrahl (L), um wärmehärtbares Harz (P) aus dem faserverstärkten Kunststoff in einer Bestrahlungsposition des Laserstrahls (L) zu entfernen, so dass in dem faserverstärkten Kunststoff enthaltenes Fasermaterial freigelegt wird; und
vollständiges Entfernen des wärmehärtenden Harzes (P) durch den Laserstrahl in einer Dickenrichtung des faserverstärkten Kunststoffs, bis nur noch das Fasermaterial übrig ist,
**dadurch gekennzeichnet, dass**, während die Oberfläche (T) des faserverstärkten Kunststoffs (S) mit dem Laserstrahl (L) bestrahlt wird, die gegenüberliegende Oberfläche des faserverstärkten Kunststoffs (S) durch eine Heizquelle erhitzt wird.

2. Verfahren nach Anspruch 1, ferner umfassend:
Bestrahlen von bestrahlten Positionen, die zumindest in einer Reihe in einem vorbestimmten Intervall beabstandet zueinander ausgerichtet sind mit mehreren Laserstrahlen (L), welche den Laserstrahl (L) umfassen; und
Bewegen der mehreren Laserstrahlen (L) in einer Richtung orthogonal zu der Reihe der bestrahlten Positionen der mehreren Laserstrahlen (L).

3. Verfahren nach Anspruch 1 oder 2, wobei die Oberfläche (T) des faserverstärkten Kunststoffs in der Bestrahlungsposition des Laserstrahls (L) als eine einzige Bestrahlungsposition mit mehreren sich überlagernden Laserstrahlen (L), welche den Laserstrahl (L) umfassen, bestrahlt wird.

## Revendications

1. Méthode de recyclage du plastique renforcé de fibres (S), comprenant :
irradier un faisceau laser (L) sur une surface (T) du plastique renforcé de fibres pour enlever la résine thermodurcissable (P) du plastique renforcé de fibres dans une position irradiée du faisceau laser (L) de telle sorte que le matériau fibreux contenu dans le plastique renforcé de fibres est exposé ; et
enlever complètement la résine thermodurcissable (P) par le faisceau laser dans une direction d'épaisseur du plastique renforcé de fibres jusqu'à ce que le matériau en fibres est exposé,
**caractérisé par le fait que**, pendant que la surface (T) de la matière plastique renforcée par des fibres (S) est irradiée par le faisceau laser (L), la surface opposée de la matière plastique renforcée par des fibres (S) est chauffée par une source de chauffage.

2. Méthode selon la revendication 1, comprenant en outre :
irradier une pluralité de faisceaux laser (L) comprenant le faisceau laser (L) dans des positions irradiées au moins alignées dans une rangée espacées les unes des autres à un intervalle prédéterminé ; et
déplacer la pluralité de faisceaux laser (L) dans une direction orthogonale à la rangée des positions irradiées de la pluralité de faisceaux laser (L).

3. Procédé selon la revendication 1 ou 2, dans lequel une pluralité de faisceaux laser (L), comprenant le faisceau laser (L), sont irradiés sur la surface (T) du plastique renforcé de fibres dans la position irradiée du faisceau laser (L) en tant que position d'irradiation unique de manière superposée.
